(19) **Europäisches Patentamt**

**European Patent Office**

**Office européen des brevets**

(11) **EP 1 025 620 B1**

(12) **FASCICULE DE BREVET EUROPEEN**

(45) Date de publication et mention
de la délivrance du brevet:
**23.04.2003 Bulletin 2003/17**

(21) Numéro de dépôt: **98944015.1**

(22) Date de dépôt: **17.09.1998**

(51) Int Cl.$^{7}$: **H01Q 13/20**, H04B 5/00

(86) Numéro de dépôt international:
**PCT/FR98/01997**

(87) Numéro de publication internationale:
**WO 99/017401 (08.04.1999 Gazette 1999/14)**

(54) **CABLE COAXIAL RAYONNANT**

ABSTRAHLENDES KOAXIALKABEL

COAXIAL RADIATING CABLE

(84) Etats contractants désignés:
**DE ES FR GB IT SE**

(30) Priorité: **01.10.1997 FR 9712403**

(43) Date de publication de la demande:
**09.08.2000 Bulletin 2000/32**

(73) Titulaire: **SAGEM S.A.**
**75015 Paris (FR)**

(72) Inventeur: **LINOSSIER, Thierry**
**F-77130 Montereau (FR)**

(74) Mandataire: **Cabinet Martinet & Lapoux**
**43, Boulevard Vauban,**
**B.P. 405,**
**Guyancourt**
**78055 St. Quentin Yvelines Cedex (FR)**

(56) Documents cités:
**WO-A-91/13415        DE-U- 29 606 368**
**FR-A- 2 552 272        FR-A- 2 652 453**
**GB-A- 1 481 485**

• **"RADIATING CABLES FOR RADIO, TELECOM
AND TV" WIRE INDUSTRY, vol. 60, no. 8, 1 août
1993, pages 450-452, XP000387214**

**Description**

La présente invention concerne un câble coaxial rayonnant des signaux hyperfréquence.

Un tel câble est par exemple installé dans une zone d'ombre, inaccessible aux émetteurs-récepteurs de diffusion classique, comme un tunnel autoroutier ou ferroviaire. Le câble rayonnant s'étend entre deux terminaisons qui sont une station d'émission et de réception et une charge adaptée ou un récepteur-régénérateur, ou bien sont des récepteurs-régénérateurs, selon que le câble est situé aux extrémités, ou non d'une ligne hyperfréquence rayonnante. Le câble émet des signaux hyperfréquence vers des radiotéléphones mobiles et réciproquement en reçoit de ceux-ci, mais également émet des signaux en modulation de fréquence vers des récepteurs radio tels qu'autoradios.

Comme cela est rappelé dans le brevet EP-B-0 547 574, un câble coaxial rayonnant montré à la figure 1 comprend concentriquement depuis son axe une âme conductrice tubulaire ou cylindrique 1, une enveloppe isolante intermédiaire 2, un conducteur tubulaire extérieur 3, et une gaine externe isolante de protection 4. Grâce à des fentes régulièrement espacées dans le conducteur extérieur pour le passage du rayonnement électromagnétique, une partie de la puissance transmise dans le câble est couplée vers l'extérieur et constitue la puissance rayonnée. Le câble fonctionne alors comme une longue antenne.

Un câble coaxial à fentes rectangulaires identiques inclinées périodiques fonctionne en mode rayonné à partir d'une fréquence $f_r$ définie par :

$$f_r = \frac{c}{(\sqrt{\varepsilon}+1)P_S} \qquad (1)$$

où c est la vitesse de la lumière ;

$P_S$ est le pas des fentes, c'est-à-dire la distance prise parallèlement à l'axe du câble, entre deux fentes successives ; et

$\varepsilon$ est la constante diélectrique de l'enveloppe isolante intermédiaire.

Lorsque la fréquence de fonctionnement f du câble est telle que $f \leq f_r$, le câble fonctionne en mode couplé. A une distance constante le long du câble, le champ rayonné fluctue considérablement avec des variations qui peuvent atteindre environ 20 dB crête à crête. Ainsi, pour garantir le niveau de puissance minimal reçu en mode couplé, il est nécessaire d'augmenter la puissance moyenne rayonnée. De plus ce mode de fonctionnement peut engendrer des problèmes lors des communications avec des radiotéléphones mobiles en raison des fluctuations très rapides du niveau de réception.

Pour $f > f_r$, le câble fonctionne en mode rayonné. Lorsque $f_r < f < 2f_r$, un seul mode dit mode principal est rayonné. Le champ rayonné à une distance constante le long du câble est très stable, les fentes étant équivalentes à des petites antennes émettant en phase. Cela évite les problèmes de fading et garantit un niveau minimum de champ émis. Le fonctionnement unimodal dans cette bande de fréquence a été longtemps préconisé pour les câbles rayonnants.

Pour $l.f_r < f < (l+1)f_r$, où l est un entier positif, le mode principal et l-1 modes secondaires sont rayonnés. Tous ces modes interfèrent entre eux et le champ émis présente des fluctuations importantes.

Pour accroître les possibilités d'utilisation d'un câble rayonnant, il est nécessaire d'augmenter autant que possible la largeur de la bande de fréquence du mode rayonné principal.

Dans le but d'élargir la bande de fréquence du mode principal pour atteindre environ un gigahertz, les brevets US-A-3 795 915 et GB-A-1 481 485 proposent un câble rayonnant dans lequel les fontes sont réparties en motifs répétés périodiquement le long du câble dans le conducteur extérieur. Dans ce cas, la fréquence de mode rayonné $F_R$ s'exprime par

$$F_R = \frac{c}{(\sqrt{\varepsilon}-1)P} \qquad (2)$$

où P est le pas du motif.

Chaque motif à $2l = 6$ fentes s'étendant sur un pas P comprend deux fentes principales $5_1$ et $5_4$ et quatre fentes auxiliaires $5_0$, $5_2$, $5_3$ et $5_5$. Dans une première moitié du motif s'étendant sur un demi-pas P/2, deux fentes auxiliaires $5_O$ et $5_2$ situées de part et d'autre d'une première fente principale $5_1$ s'étendent obliquement par rapport à l'axe du câble. Dans une deuxième moitié du motif s'étendant sur un demi-pas P/2, deux fentes auxiliaires $5_3$ en $5_5$ situées de part et d'autre d'une deuxième fente principale $5_4$ s'étendent suivant une direction oblique à l'axe du câble et symétrique à la direction des fontes $5_0$ à $5_2$ de la première moitié par rapport à l'axe XX du câble.

Grâce à la répétition périodique du motif le long du câble, les modes secondaires apparaissant aux fréquences comprises entre 200 et 1000 MHz sont négligeables et quasiment nuls, les I=3 premiers modes secondaires étant éliminés.

D'autre part, on observe qu'un phénomène de résonance intervient au niveau des fentes à une fréquence de coupure de l'ordre de 1000 à 1200 MHz pour ce type de câble à motifs de fentes périodiques. L'affaiblissement linéique du câble devient rédhibitoire. Le câble se comporte alors comme un filtre passe-bas et "coupe" à partir de la fréquence de coupure.

Actuellement, la bande de fréquence de fonctionnement d'un câble rayonnant doit être encore élargie au-delà du gigahertz, c'est-à-dire à 2 GHz au moins, de manière à couvrir non seulement les fréquences de secours et de radiomessagerie à environ 450 MHz et la bande de radiotéléphone GSM à 900 MH$_z$, mais également la bande de radiotéléphone DCS 1800 et DECT à 1800 MHz.

Plus la fréquence à transmettre est élevée, plus le signal se propageant dans le câble est atténué. Il est donc nécessaire de compenser ce phénomène par l'augmentation de la puissance rayonnée.

Pour augmenter la puissance rayonnée, les dimensions, particulièrement les longueurs, des fentes peuvent être augmentées. Pour une inclinaison donnée des fentes, la longueur des fentes est limitée par la circonférence d'une section circulaire du conducteur externe cylindrique qui est généralement issu d'un ruban conducteur ayant une largeur sensiblement supérieure à ladite circonférence de section circulaire.

Pour augmenter la largeur de la bande de fréquence de mode rayonné, le nombre de fentes par motif peut être augmenté et pour décaler cette bande de fréquence vers des fréquences plus élevées, le pas du motif peut être diminué (voir formule 2). Le nombre de fentes dans chaque motif et ainsi la distance entre fentes successives sont limités par le pas du motif.

A diamètre constant de conducteur extérieur, plus les fentes sont larges et/ou longues et/ou nombreuses dans un pas de motif, et/ou plus le pas du motif est court, plus les fentes sont difficilement réalisables dans un ruban conducteur mince et plus la tenue mécanique du ruban de conducteur extérieur est faible, ce qui rend très difficile, voire impossible la formation du ruban conducteur en conducteur cylindrique extérieur et donc le perçage et la pose du conducteur extérieur et ainsi la fabrication du câble.

En outre, l'augmentation des dimensions des fentes pour obtenir la puissance rayonnée maximale entraîne un abaissement de la fréquence de coupure du câble et donc un rétrécissement de sa bande passante. Pour autoriser un fonctionnement jusqu'à 2 GHz, il faudrait donc diminuer la superficie des fentes et donc réduire la puissance rayonnée.

Le modèle d'utilité DE-A-29606368 et la demande de brevet FR-A-2552272 divulguent un câble électrique coaxial rayonnant dont le conducteur extérieur comporte des séries successives de trous alignés selon un segment d'hélice. Plusieurs séries parallèles de trous peuvent être incluses dans un motif périodique. Les séries de trous remplacent ainsi les fentes précitées et améliorent la tenue mécanique du conducteur extérieur. Toutefois, les deux documents précités ne suggèrent aucune caractéristique du câble pour qu'il rayonne suffisamment dans une bande utile s'étendant au-delà du gigahertz.

La présente invention vise à fournir un câble coaxial rayonnant avec une bonne tenue mécanique du conducteur extérieur, permettant d'augmenter la puissance rayonnée et la bande de fréquence du mode principal rayonné et en même temps d'élargir la bande passante du câble en repoussant la fréquence de coupure au-delà de 2 GHz.

A cette fin, un câble coaxial rayonnant est tel que défini dans la revendication 1. Un cable coaxial rayonnant selon le préambule de la revendication 1 est connu par le document DE-U- 296 06 368.

L'affaiblissement linéique α d'un câble coaxial rayonnant selon l'invention peut s'exprimer de la façon suivante :

$$\alpha = \alpha_{coax} + \alpha_{sup'}$$

où $\alpha_{coax}$ est l'affaiblissement linéique du câble coaxial sans séries de trous, représentant les pertes ohmiques et diélectriques, et $\alpha_{sup}$ est l'affaiblissement linéique supplémentaire dû à la présence des séries de trous. Pour un câble fonctionnant en mode rayonné, $\alpha_{sup}$ provient des conductances parallèles localisées introduites par chaque trou rayonnant. A partir de la première fréquence de résonance d'un trou rayonnant, la quasi-totalité de l'énergie est dissipée dans le trou. $\alpha_{sup}$ augmente alors de façon rédhibitoire et le câble se comporte comme un filtre passe-bas de fréquence de coupure $F_C$.

Pour une série de trous d'un câble selon l'invention, la fréquence de coupure $F_C$ est déterminée par :

$$F_C = \frac{c}{\sqrt{\varepsilon}\Gamma}$$

où $\Gamma$ est le périmètre du trou individuel de plus grande taille dans le câble. Cette fréquence de coupure détermine la bande passante du câble. Elle est supérieure à la fréquence maximale $F_{max} = (I+1)F_r$ de fonctionnement de systèmes de radiocommunication devant être relayés par le câble, typiquement de 2 à 3 GHz. Si chaque trou individuel à un périmètre $\Gamma$ inférieur à $c/(\sqrt{\varepsilon}\ F_{max})$, le câble ne coupe pas dans la plage de fréquence de fonctionnement recherchée.

Typiquement, pour $F_{max} = 3$ GHz et un câble ayant une enveloppe isolante en polyéthylène cellulaire ($\varepsilon=1,3$), le périmètre maximum des trous est de 88 mm.

La puissance rayonnée dépend de la longueur et de la largeur des séries de trous et n'est donc pas affectée par la limitation de la taille de chaque trou. Ainsi, à puissance rayonnée équivalente, un câble selon l'invention a une fréquence de coupure bien plus élevée et une bande passante bien plus large qu'un câble à motifs périodiques connus.

Les trous étant séparés par de la matière de conducteur extérieur, les séries de trous selon l'invention peuvent être ainsi plus longues et plus rapprochées que les fentes dans les câbles coaxiaux rayonnants connus. Puisque la longueur des fentes influe de manière prépondérante dans l'augmentation de la puissance rayonnée, au moins une série de trous, typiquement une série de trous principale dans un motif, peut s'étendre sur au moins un demi-tour du conducteur extérieur. La puissance rayonnée peut ainsi être augmentée. Puisque le rapprochement des fentes permet une diminution du pas du motif et/ou une augmentation du nombre de fentes par motif, et ces paramètres influent de manière prépondérante dans l'augmentation de la largeur de bande de fréquence du mode principal rayonné par le câble et son déplacement vers des fréquences plus élevées, le mode principal peut être obtenu pour des fréquences atteignant 2 à 3 GHz.

Selon des réalisations préférées, les trous sont sensiblement rectangulaires et sensiblement de même largeur et sont alignés suivant un grand axe commun dans chaque série, ou les trous sont sensiblement circulaires et sensiblement de même diamètre. Les trous dans chaque série sont espacés au moins sensiblement de la demi-largeur des trous afin que les trous soient réalisables par poinçonnage dans le conducteur extérieur et ne fragilisent pas celui-ci lors de sa mise en forme cylindrique.

En particulier, par analogie avec les câbles à fentes, la bande de fréquence du mode principal du câble est étendue lorsque chaque motif comprend sur un demi-pas une moitié de séries de trous s'étendant parallèlement suivant l'un de deux sens d'enroulement d'hélice autour du conducteur extérieur et sur l'autre demi-pas une moitié de séries de trous s'étendant parallèlement suivant l'autre sens d'enroulement d'hélice. Chaque moitié comprend une série de trous centrale plus longue que les autres séries de trous. Plusieurs séries de trous adjacentes incluses dans un demi-motif sont distances sensiblement du huitième du pas prédéterminé.

Selon un autre aspect de l'invention, les séries de trous font un angle sensiblement de $\pm\ 45°$ environ avec l'axe du câble de manière à maximiser la puissance de rayonnement des séries de trous.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est une vue en perspective longitudinale d'un câble coaxial rayonnant à motif périodique de fentes selon la technique antérieure ;
- la figure 2 est un graphe de variation d'un paramètre dépendant de l'inclinaison d'une fente inclus dans un potentiel de rayonnement de la fente en fonction de l'inclinaison de la fente ;
- la figure 3 est un graphe de variation du potentiel de rayonnement d'une fente en fonction de la largeur de la fente ;
- la figure 4 est un graphe de variation du potentiel de rayonnement d'une fente en fonction de la longueur de la fente ;
- la figure 5 est une vue en perspective longitudinale d'un câble rayonnant à motif périodique de séries de trous circulaires alignés selon une première réalisation de l'invention ;
- la figure 6 est une vue en plan d'un ruban conducteur à plat correspondant au conducteur extérieur du câble rayonnant montré à la figure 5 ; et
- la figure 7 est une vue en perspective longitudinale d'un câble rayonnant à motif périodique de séries de trous rectangulaires alignés selon une seconde réalisation de l'invention.

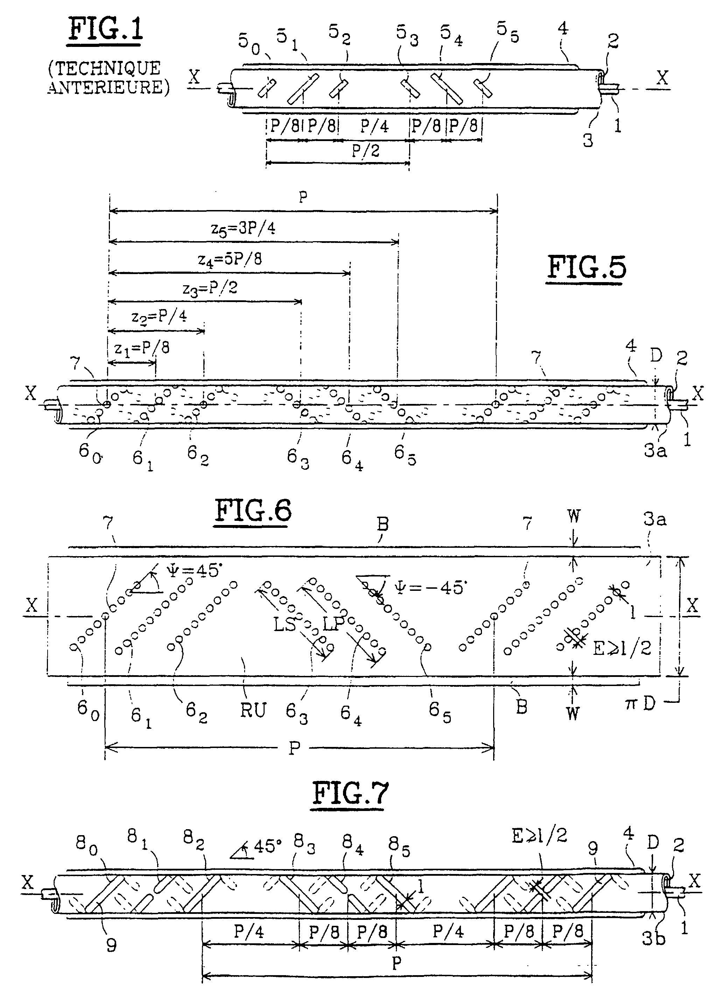

Afin de mieux appréhender la finalité des caractéristiques d'un câble coaxial rayonnant salon l'invention, les modalités pour élargir la bande de fréquence de fonctionnement optimal unimodal d'un câble rayonnant avec un motif périodique à I fentes rectangulaires inclinées sont présentées en référence à la figure 1.

A titre d'exemple, l'objectif est de réaliser un câble coaxial rayonnant ayant une bande ce fonctionnement unimodal qui englobe les principales bandes utiles précitées à 450, 900 et 1800 MHz, soit une bande typiquement comprise entre Fr = 282,6 MHz et une fréquence maximale $F_{max} = (I+1)$ Fr = 7Fr = 1978,2 MHz, pour un pas de motif périodique de P = 500 mm à I = 6 fentes $5_0$ à $5_5$. Le motif est caractérisé par le pas de répétition P, la distance $z_i$ entre la fente $5_i$ du motif et la première fente $5_0$ du motif, avec $1 \leq i \leq I\text{-}1$ et $I{\geq}2$, et les potentiels de rayonnement $V_0$ à $V_{I\text{-}1}$ des fentes $5_0$ à $5_{I\text{-}1}$.

Le système de I relations suivantes doit être satisfait :

$$\sum_{i=1}^{i=I-1} V_i \; e^{-jz_i \frac{2\pi}{d}} \neq V_0$$

$$\sum_{i=1}^{i=I-1} V_i \; e^{-jz_i \frac{2k\pi}{d}} = V_0$$

avec $2 \leq k \leq I$

Les solutions du système précédent sont :

$$V_1 = 1,414.V_0 \qquad z_1 = P/8$$

$$V_2 = V_0 \qquad z_2 = P/4$$

$$V_3 = - V_0 \qquad z_3 = P/2$$

$$V_4 = - 1,414.V_0 \qquad z_4 = 5P/8$$

$$V_5 = - V_0 \qquad z_5 = 6P/8$$

Le potentiel de rayonnement V d'une fente est calculé à partir des caractéristiques géométriques de la fente par la relation suivante :

$$V = \frac{\pi}{\lambda^2} \sqrt{\frac{\mu 0}{\varepsilon 0}} \; |\frac{\pi}{24} \; \frac{L^3}{Ln(\frac{4L}{l}-1)} - \frac{\pi}{16}l^2 \; L| \; \sin\psi \; \cos\psi \; \frac{V_{in}}{\pi D Z_c} \qquad (2)$$

où $\lambda$ est la longueur d'onde, $\mu_0$ et $\varepsilon_0$ sont la perméabilité magnétique et la permittivité diélectrique du vide, L et l sont les longueur et largeur de la fente, $\psi$ est l'inclinaison du grand axe de la fente par rapport à l'axe XX du câble, D est le diamètre du conducteur extérieur 3 du câble, $Z_C$ est l'impédance caractéristique du câble, $V_{in}$ est la tension d'entrée appliquée à une extrémité du câble.

Pour une tension d'entrée donnée, le module du potentiel V peut être ajusté par les paramètres suivants : $\psi$, L, l, D et $Z_C$.

La relation (2) montre qu'une diminution de l'impédance caractéristique et du diamètre du câble augmente le potentiel de rayonnement.

La relation (2) indique aussi explicitement la variation du potentiel de rayonnement, non seulement en fonction des dimensions L et l de la fente mais également de son inclinaison $\psi$, comparativement aux trois brevets précités, ce qui permet d'optimiser ces paramètres.

Le signe du potentiel de rayonnement V est déterminé par le signe de l'inclinaison $\psi$ :

si $\psi < 0$, alors $V < 0$, pour les fentes $4_0$ à $4_2$ suivant des portions de spires parallèles d'hélice de sens rétrograde (à droite) ;
si $\psi > 0$, alors $V > 0$, pour les fentes $4_3$ à $4_5$ suivant des portions de spires d'hélice de sens direct (à gauche).

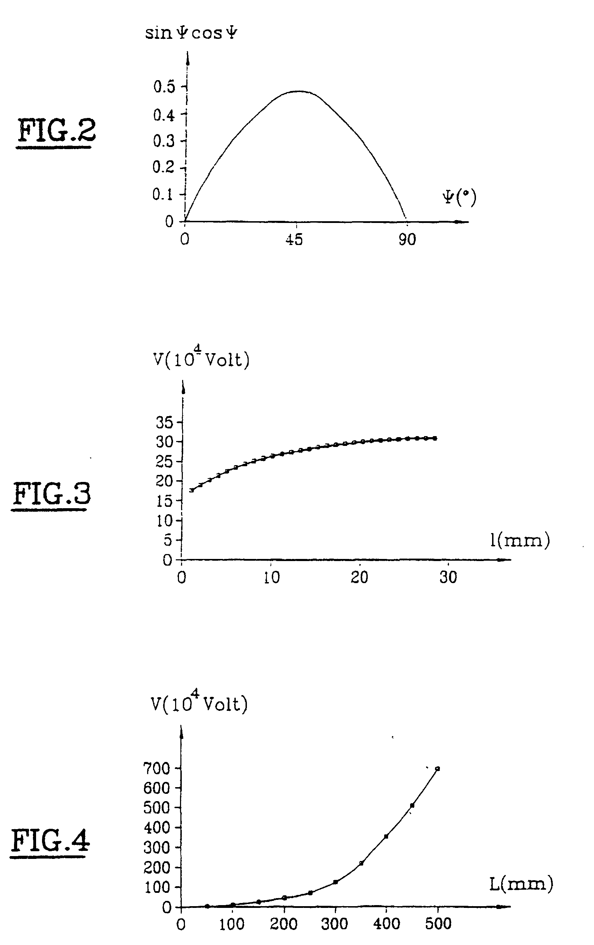

La variation du potentiel V en fonction de l'angle $\psi$, qui est proportionnelle à celle du produit $(\sin\psi.\cos\psi) = (\sin 2\psi)/2$ en fonction de l'angle $\psi$ comme montré à la figure 2, confirme que la contribution au rayonnement d'une fente parallèle à l'axe longitudinal XX du câble est égale à zéro. Toutefois, contrairement aux recommandations dans le brevet EP-B-0 547 374 selon lesquelles il est préférable que l'inclinaison des fentes ne dépasse pas une valeur prédéterminée, fonction du diamètre extérieur du câble, typiquement de 30°, de préférence choisie entre 15 et 25°, la figure 2 montre que le potentiel de rayonnement est maximum pour une fente inclinée de $\psi = \pm 45°$ par rapport à l'axe du câble.

La figure 3 représente la variation du potentiel de rayonnement V en fonction de la largeur de la fente, pour une longueur de la fente donnée de 150 mm et une inclinaison $\psi$ de 45°, les autres paramètres étant constants. La figure 4 représente la variation du potentiel de rayonnement V en fonction de la longueur de la fente, pour une largeur de la fente donnée de 5 mm et une inclinaison $\psi$ de 45°, les autres paramètres étant constants.

D'après les figures 3 et 4, le potentiel de rayonnement d'une fente augmente avec la taille de celle-ci, comme cela est bien connu. Toutefois, la longueur L de la fente influe beaucoup plus que la largeur de celle-ci sur le potentiel V.

Comme déjà dit, une augmentation de la superficie de la fente augmente l'affaiblissement linéique du câble et fragilise le conducteur extérieur, ce qui nécessite selon la technique antérieure de limiter la taille de la fente. Afin d'optimiser le rayonnement, il est beaucoup plus intéressant d'avoir une fente de grande longueur et de limiter la largeur de la fente. Les réalisations de l'invention décrites ci-après sont orientées vers cet objectif.

Selon une première réalisation montrée à la figure 5, un câble coaxial rayonnant diffère du câble selon la technique antérieure montré à la figure 1, essentiellement par le conducteur extérieur 3a. Chaque motif de pas P comprend I=6 séries $6_0$ à $6_5$ de trous sensiblement circulaires 7 pratiqués dans le conducteur extérieur 3a. L'expression "sensiblement circulaires" se rapporte à des trous circulaires ou de section voisine polygonale ou carrée. Selon la réalisation illustrée à la figure 5, chaque série principale $6_1$, $6_4$ comprend dix trous alignés, et chaque série secondaire $6_0$, $6_2$, $6_3$, $6_5$ comprend neuf trous alignés. Chaque série de trous alignés a une longueur L et une largeur I qui sont liées au potentiel par la relation (2). En l'occurrence, la largeur I des séries est égale au diamètre des trous 7, et correspond à celle d'une fente. Selon l'invention, chaque trou a un diamètre I tel que $I < c/ (\pi. \sqrt{\varepsilon}.F_{max})$, où $\varepsilon$ est la constante diélectrique de l'enveloppe isolante 2 et $F_{max}=(I+1)Fr$ une fréquence maximum d'utilisation de l'ordre de 2 GHz.

Les séries de trous $6_0$ à $6_5$ pratiquées dans le conducteur extérieur 3a peuvent être beaucoup plus longues que les fentes $5_0$ à $5_5$ dans les câbles connus, sans fragiliser le ruban métallique RU constituant le conducteur extérieur 3a et le détériorer lors de sa pose en long avant d'envelopper l'enveloppe isolante intermédiaire 2.

L'ensemble des trous est réalisé par poinçonnage dans un ruban en aluminium, en cuivre, ou en aluminium ou en cuivre revêtu d'une couche de matière plastique, par exemple PVC ou polyester. L'espacement E entre chaque trou est au moins l'espacement minimum qui autorise mécaniquement le poinçonnage, soit sensiblement un demi-diamètre de trou I/2.

Les séries principales de trous $6_1$ et $6_4$ de longueur LP et les séries secondaires de trous $6_0$, $6_2$, $6_3$ et $6_5$ de longueur LS peuvent s'étendre hélicoïdalement sur plus de la demi-section longitudinale du conducteur extérieur 3a de diamètre D, soit des longueurs LS et LP supérieures à $\pi D/\sqrt{2}$ pour $\psi = 45°$, jusqu'à s'étendre quasiment sur des spires complètes autour du conducteur extérieur, c'est-à-dire sur au moins un tour du conducteur extérieur, soit des longueurs sensiblement égales, voire supérieures à $\sqrt{2}\ \pi D$ pour $\psi = 45°$.

Le rayonnement obtenu dans ce dernier cas présente sensiblement une symétrie autour de l'axe XX du câble.

Comparativement aux fentes dans les câbles connus, les lignes de courant sur le conducteur extérieur ne sont pas coupées entièrement, et le mode de propagation TEM interne au câble est moins perturbé. En particulier, le phénomène de coupure bien connu qui intervient sur les câbles à mode rayonné connus et qui limite leur bande passante est repoussé à des fréquences supérieures à 2 GHz.

La figure 6 montre un ruban conducteur RU disposé à plat à partir duquel le conducteur extérieur 3a est conformé en un cylindre de diamètre D. Le ruban RU présente une largeur utile $\pi D$ et des bordures longitudinales B ayant une largeur W de quelques millimètres. L'une des bordures est recouverte par l'autre lors de la pose du ruban autour de l'enveloppe isolante 2 sans pour cela vriller ou plier le ruban grâce à la conservation quasiment de la rigidité initiale du ruban. Les bordures B sont liées par soudure ou thermocollage ou agrafage.

Pour une dimension de câble donnée, la longueur de série principale de trous LP est déterminée en fonction de la largeur utile $\pi D$ du ruban métallique RU constituant le conducteur extérieur 3a et de la largeur 1 des trous choisie de manière à calculer le potentiel $V_1$ avec L = LP selon la relation (2). La longueur de série secondaire de trous LS est calculée à l'aide de la relation (2), avec L = LS, pour un potentiel de rayonnement $V_0$ tel que $V_1 = 1,414\ V_0$.

Selon une deuxième réalisation montrée à la figure 7, dans le conducteur extérieur 3b d'un câble coaxial rayonnant selon l'invention sont prévus des motifs à I = 6 séries $8_0$ à $8_5$ de trous sensiblement alignés rectangulaires 9. L'expression "sensiblement rectangulaire" englobe des trous strictement rectangulaires, ou elliptiques allongés, ou oblongs par exemple, de largeur I et de longueur Lt.

Les séries de trous rectangulaires sont également réparties, selon la réalisation illustrée, en une série de trous principale $8_1$, $8_4$ et deux séries de trous secondaires $8_0$ et $8_2$, $8_3$ et $8_5$ de part et d'autre de la série de fente principale, dans chaque demi-motif P/2. Chaque série de trous $8_0$ à $8_5$ comprend deux ou plus trous rectangulaires 7 ayant un grand axe commun, c'est-à-dire alignés suivant leurs longueurs Lt, le long d'une portion d'une spire hélicoïdale, voire d'une spire ou plus d'une spire. Selon la figure 7, chaque série principale $8_1$, $8_4$ a une longueur LP et comprend un trou rectangulaire central long et deux trous rectangulaires d'extrémité plus courts, et chaque série secondaire $8_0$, $8_2$, $8_3$, $8_5$ a une longueur LS et comprend deux trous rectangulaires identiques alignés. Les trous 9 ont toutes la même largeur l. Selon l'invention, pour une largeur donnée l de l'ordre du millimètre, la plus grande longueur Lt des longs trous n'excède pas $c/(2.l.\sqrt{\varepsilon}.F_{max})$.

A titre d'exemple, un câble coaxial rayonnant selon l'invention présentant une largeur de bande de mode principal comprise entre 283 MHz et 1978 MHz présente les caractéristiques suivantes :

- impédance caractéristique $Z_C$ = 75 Ω ;
- conducteur intérieur 1 en cuivre de diamètre 4,06 mm ;
- enveloppe isolante intermédiaire 2 constituée de tronçons séparés ovoïdaux appelés ballons, en polyéthylène de permittivité diélectrique ε = 1,28, avec un diamètre interne de 4,1 mm et un diamètre externe de 16,1 mm ;
- conducteur extérieur 3a en cuivre de diamètre D = 16,23 mm et d'épaisseur 0,2 mm revêtu d'une couche externe de copolymère d'épaisseur 0,05 mm, issu d'un ruban conducteur RU de largeur πD + 2W = 59 mm avec des bandes longitudinales de recouvrement B de largeur W = 4 ± 1 mm ;
- gaine extérieure isolante 4 en polymère composite d'épaisseur 1,9 mm et de diamètre extérieur 20,5 ± 0,5 mm ;
- pas P des motifs = 500 mm ;
- longueur des séries principales $6_1$ et $6_4$ : LP = 45,3 mm ;
- longueur des séries secondaires $6_0$, $6_2$, $6_3$ et $6_5$ : LS = 40 mm ;
- diamètre des trous circulaires 7 : l = 3 mm.

Selon un autre exemple, un câble coaxial rayonnant de l'invention présentant une largeur de bande de mode principal comprise entre 286 MHz et 2002 MHz présente les caractéristiques suivantes :

- impédance caractéristique $Z_C$ = 50 Ω ;
- conducteur intérieur 1 en cuivre de diamètre 9,1 mm ;
- enveloppe isolante intermédiaire 2 en polyéthylène cellulaire de permittivité diélectrique ε = 1,3, avec un diamètre interne de 9,1 mm et un diamètre externe de 23,5 mm ;
- conducteur extérieur 3b en cuivre de diamètre D = 24,5 mm et d'épaisseur 0,15 mm, issu d'un ruban conducteur RU de largeur πD + 2W = 90 mm avec des bandes longitudinales de recouvrement B de largeur W = 6,5 ± 1 mm ;
- gaine extérieure isolante 4 en polymère composite d'épaisseur 1,9 mm et de diamètre extérieur 28,3 ± 0,5 mm ;
- pas P des motifs = 490 mm ;
- longueur des séries principales $8_1$ et $8_4$ = 126 mm ; à raison de 4 trous rectangulaires par série, de longueur Lt = 30 mm et largeur l = 3 mm, espacés de 2 mm ;
- longueur des séries secondaires $8_0$, $8_2$, $8_3$ et $8_5$ = 112 mm ; à raison de 4 trous rectangulaires par série, de longueur Lt = 26,5 mm et largeur l = 3 mm, espacés de 2 mm.

**Revendications**

1. Câble coaxial rayonnant, comprenant un conducteur intérieur (1) et un conducteur extérieur (3a ; 3b) dans lequel des séries de trous s'étendent obliquement à l'axe (XX) du câble et sont réparties en motifs périodiques de pas prédéterminé (P), et une enveloppe isolante (2) située entre les conducteurs intérieur et extérieur et ayant une constante diélectrique ε, **caractérisé en ce que**, pour fonctionner en mode rayonné unimodal dans une bande de fréquence comprise entre une frequence inférieure $F_r$ et une fréquence prédéterminée $F_{max}$ = (I+1)Fr, I étant un entier au moins égal à 2, chaque motif ($6_0$ à $6_5$ ; $8_0$ à $8_5$) comprend I séries de trous dont au moins deux sont différentes par au moins l'un des paramètres suivants : la taille des trous, le nombre de trous et la longueur de série de trous, et chaque trou (7; 9) a un périmètre inférieur à $c/(\sqrt{\varepsilon}\ F_{max})$, où c est la vitesse de la lumière.

2. Câble coaxial conforme à la revendication l, dans lequel les trous (9) sont sensiblement rectangulaires et sensiblement de même largeur (1), et sont alignés suivant un grand axe commun dans chaque série ($8_0$ à $8_5$).

3. Câble coaxial conforme à la revendication 1, dans lequel les trous (7) sont sensiblement circulaires et sensiblement de même diamètre (l).

4. Câble coaxial conforme à l'une quelconque des revendications 1 à 3, dans lequel au moins une série de trous ($6_0$ à $6_5$ ; $8_0$ à $8_5$) s'étend sur au moins un demi-tour du conducteur extérieur (3a ; 3b).

**5.** Câble coaxial conforme à l'une quelconque des revendications 1 à 4, dans lequel les trous (7 ; 9) dans chaque série sont espacés au moins sensiblement de la demi-largeur (1/2) des trous.

**6.** Câble coaxial conforme à l'une quelconque des revendications 1 à 5, dans lequel chaque motif (P) comprend sur un demi-pas (P/2) une moitié de séries de trous ($6_0$ à $6_2$ ; $8_0$ à $8_2$) s'étendant parallèlement suivant l'un de deux sens d'enroulement d'hélice autour du conducteur extérieur (3a ; 3b) et sur l'autre demi-pas (P/2) une moitié de séries de trous ($6_3$ à $6_5$ ; $8_3$ à $8_5$) s'étendant parallèlement suivant l'autre sens d'enroulement d'hélice.

**7.** Câble coaxial conforme à la revendication 6, dans lequel chaque moitié comprend une série de trous centrale ($6_1$, $6_4$ ; $8_1$, $8_4$) plus longue que les autres séries de trous ($6_0$, $6_2$, $6_3$, $6_5$ ; $8_0$, $8_3$, $8_3$, $8_5$).

**8.** Câble coaxial conforme à la revendication 6 ou 7, dans lequel plusieurs séries de trous adjacentes ($6_0$-$6_1$, $6_1$-$6_2$ ; $6_3$-$6_4$, $6_4$-$6_5$ ; $8_0$-$8_1$, $8_1$-$8_3$ ; $8_3$-$8_4$, $8_4$-$8_5$) incluses dans un demi-motif sont distantes sensiblement du huitième (P/8) du pas prédéterminé.

**9.** Câble coaxial conforme à l'une quelconque des revendications 1 à 8, dans lequel des séries de trous ($6_0$ à $6_5$ ; $8_0$ à $8_5$) font un angle ($\psi$) sensiblement de $\pm 45°$ environ avec l'axe (XX) du câble.

**Patentansprüche**

**1.** Abstrahlendes Koaxialkabel mit einem inneren Leiter (1) und einem äußeren Leiter (3a; 3b), wobei sich in dem äußeren Reihen von Löchern schräg zur Achse (XX) des Kabels erstrecken, die in periodischen Mustern mit festgelegtem Wiederholungsabstand (P) verteilt sind, und einem isolierenden Mantel (2), der sich zwischen dem inneren und dem äußeren Leiter befindet und eine Dielektrizitätskontante $\varepsilon$ aufweist,
**dadurch gekennzeichnet, dass**
für die Funktion im Einmoden-Abstrahlmodus in einem Frequenzband zwischen einer unteren Frequenz $f_r$ und einer festgelegten Frequenz $f_{max}$ = (I+1) fr, wobei I eine ganze Zahl größer gleich zwei ist, jedes Muster ($6_0$ bis $6_5$ ; $8_0$ bis $8_5$) I Reihen von Löchern enthält, von denen sich wenigstens zwei durch wenigstens einen der folgenden Parameter Größe der Löcher, Anzahl der Löcher und Länge der Reihe der Löcher unterscheiden und jedes Loch (7 ; 9) einen Mindestumfang von $c/(\sqrt{\varepsilon} \cdot f_{max})$, wobei c die Lichtgeschwindigkeit ist.

**2.** Koaxialkabel gemäß Anspruch 1, bei dem die Löcher (9) im wesentlichen rechteckig sind und im wesentlichen die gleiche Länge (I) haben, und die in jeder Reihe (80 bis 85) in Richtung eines gemeinsamen Hauptachsensystems angeordnet sind.

**3.** Koaxialkabel gemäß Anspruch 1, bei dem die Löcher (7) im wesentlichen rund sind und im wesentlichen denselben Durchmesser (I) haben.

**4.** Koaxialkabel gemäß irgendeinem der Ansprüche 1 bis 3, bei dem sich wenigstens eine Reihe von Löchern (60 bis 65 ; 80 bis 85) wenigstens eine halbe Umdrehung um den äußeren Leiter (3a; 3b) erstreckt.

**5.** Koaxialkabel gemäß irgendeinem der Ansprüche 1 bis 4, bei dem die Löcher (7 ; 9) in jeder Reihe voneinander einen Abstand von wenigstens im wesentlichen der Hälfte der Größe (I/2) der Löcher hat.

**6.** Koaxialkabel gemäß irgendeinem der Ansprüche 1 bis 5, bei dem jedes Muster (P) eine Hälfte der Reihen der Löcher (60 bis 62 ; 80 bis 82), die sich parallel zu einer der beiden Richtungen der schraubenförmigen Wicklung des äußeren Leiters (3a ; 3b) erstrecken, innerhalb des halben Wiederholungsabstandes (P/2) und die andere Hälfte der Reihen von Löchern (63 bis 65 ; 83 bis 85), die sich parallel zu der Richtung der anderen schraubenförmigen Wicklung erstrecken, innerhalb des anderen halben Wiederholungsabstandes (P/2) enthält.

**7.** Koaxialkabel gemäß Anspruch 6, bei dem jede Hälfte eine zentrale Reihe von Löchern (61, 64; 81, 84) enthält, die länger als die anderen Reihen von Löchern (60, 62, 63, 65 ; 80, 82, 83, 85) ist.

**8.** Koaxialkabel gemäß Anspruch 6 oder 7, bei dem mehrere Reihen aneinander grenzender Löcher (60-61, 61-62 ; 63-64, 64-65 ; 80-81, 81-82 ; 83-84 ; 84-85), die in einem Halbmuster enthalten sind, voneinander im wesentlichen einen Abstand von einem Achtel (P/8) des festgelegten Wiederholungsabstandes haben.

**9.** Koaxialkabel gemäß irgendeinem der Ansprüche 1 bis 8, bei dem die Reihen von Löchern (60 bis 65 ; 80 bis 85) mit der Achse (XX) des Kabels einen Winkel ($\psi$) von im wesentlichen ungefähr $\pm$ 45° bilden.

**Claims**

**1.** A coaxial radiating cable comprising an inner conductor (1) and an outer conductor (3a; 3b) in which series of holes extend obliquely to the axis (XX) of the cable and are distributed in periodic patterns of predetermined pitch (P), and an insulating sheath (2) situated between the inner and outer conductors and having a dielectric constant $\varepsilon$, **characterised in that** in order to operate in unimodal radiated mode in a frequency band contained between a bottom frequency Fr and a predetermined frequency $F_{max-}$ (I+1)Fr, I being an integer equal at least to 2, each pattern ($6_0$ to $6_5$; $8_0$ to $8_5$) comprises I series of holes of which at least two are different by at least one of the following parameters: the size of the holes, the number of holes and the hole series length, and each hole (7; 9) has a perimeter less than $c/(\sqrt{\varepsilon} \ F_{max})$, where c is the speed of light.

**2.** A coaxial cable according to claim 1, wherein the holes (9) are substantially rectangular and substantially of the same width (I), and are aligned along a common major axis in each series ($8_0$ to $8_5$).

**3.** A coaxial cable according to claim 1, wherein the holes (7) are substantially circular and substantially of the same diameter (1).

**4.** A coaxial cable according to any one of claims 1 to 3, wherein at least one series of holes ($6_0$ to $6_5$; $8_0$ to $8_5$) extends over at least a half revolution of the outer conductor (3a, 3b).

**5.** A coaxial cable according to any one of claims 1 to 4, wherein the holes (7; 9) in each series are spaced at least substantially by the half-width (1/2) of the holes.

**6.** A coaxial cable according to any one of claims 1 to 5, wherein each pattern (P) comprises over a half-pitch (P/2) a half hole series ($6_0$ to $6_2$; $8_0$ to $8_2$) extending in parallel along one of the two directions of helical winding around the outer conductor (3a; 3b) and over the other half pitch (P/2) a hole series half ($6_3$ to $6_5$; $8_3$ to $8_5$) extending in parallel along the other helical winding direction.

**7.** A coaxial cable according to claim 6, wherein each half comprises a central series of holes ($6_1$, $6_4$; $8_1$, $8_4$) longer than the other series of holes ($6_0$, $6_2$, $6_3$, $6_5$; $8_0$, $8_2$, $8_3$, $8_5$).

**8.** A coaxial cable according to claim 6 or 7, wherein a plurality of adjacent hole series ($6_0$ - $6_1$, $6_1$ - $6_2$; $6_3$ - $6_4$, $6_4$ - $6_5$; $8_0$ - $8_1$, $8_1$ - $8_2$; $8_3$ - $8_4$, $8_4$ - $8_5$) included in a half-pattern are spaced apart substantially by one-eighth (P/8) of the predetermined pitch.

**9.** A coaxial cable according to any one of claims 1 to 8, wherein series of holes ($6_0$ to $6_5$; $8_0$ to $8_5$) form an angle ($\psi$) of substantially $\pm$ 45° with the axis (XX) of the cable.

FIG.1
(TECHNIQUE ANTERIEURE)

FIG.5

FIG.6

FIG.7

FIG.2

sin Ψ cos Ψ

FIG.3

V($10^4$ Volt)

FIG.4

V($10^4$ Volt)